# EUROPÄISCHE PATENTSCHRIFT

(11) **EP 2 808 644 B1**
(45) Veröffentlichungstag und Bekanntmachung des Hinweises auf die Patenterteilung: **01.11.2017**
(21) Anmeldenummer: 14169950.4
(22) Anmeldetag: 27.05.2014
(51) Int. Cl.: G01B 9/02, G01H 9/00

(54) **Optisches Interferometer und Vibrometer mit solch einem optischen Interferometer**
Optical interferometer and vibrometer with such an optical interferometer
Interféromètre optique et vibromètre doté d'un tel interféromètre optique

(30) Priorität: 27.05.2013 DE 102013209833
(43) Veröffentlichungstag der Anmeldung: 03.12.2014
(73) Patentinhaber: Polytec GmbH, 76337 Waldbronn (DE)
(72) Erfinder: Rembe, Christian, 76337 Waldbronn (DE); Wörtge, Michael, 69120 Heidelberg (DE); Dräbenstedt, Alexander, 76275 Ettlingen (DE); Braun, Tobias, 76307 Karlsbad (DE)
(74) Vertreter: Lemcke, Brommer & Partner Patentanwälte Partnerschaft mbB

(56) Entgegenhaltungen:
- EP-A2- 0 977 022
- US-A1- 2011 174 078
- YANLU LI ET AL: "Realization of fiber-based laser Doppler vibrometer with serrodyne frequency shifting", APPLIED OPTICS, OPTICAL SOCIETY OF AMERICA, WASHINGTON, DC; US, Bd. 50, Nr. 17, 10. Juni 2011 (2011-06-10) , Seiten 2809-2814, XP001563585, ISSN: 0003-6935, DOI: 10.1364/AO.50.002809 [gefunden am 2011-06-09]
- H. TODA ET AL: "Optical integrated circuit for a fiber laser doppler velocimeter", JOURNAL OF LIGHTWAVE TECHNOLOGY, Bd. 5, Nr. 7, 7. Juli 1987 (1987-07-07), Seiten 901-905, XP055140673, ISSN: 0733-8724, DOI: 10.1109/JLT.1987.1075595

## Beschreibung

Die Erfindung betrifft ein optisches Interferometer gemäß Oberbegriff des Anspruchs 1 sowie ein Interferometer, welches ein solches optisches Interferometer aufweist.

Mittels optischer Interferometer wird ein Ausgangsstrahl mittels einer Strahlteilervorrichtung in zumindest einem ersten und einem zweiten Teilstrahl aufgeteilt, die beiden Teilstrahlen zumindest bereichsweise durch getrennte optische Bahnen geführt und schließlich die beiden Teilstrahlen zur Ausbildung einer Interferenz wieder überlagert. Es sind Interferometer in Ausgestaltungen wie beispielsweise das Mach-Zehnder-Interferometer oder das Michelson-Interferometer bekannt.

Die Erfindung betrifft hierbei Interferometer, welche als heterodyne Interferometer ausgebildet sind. Solche heterodynen Interferometer weisen zumindest einen optischen Frequenzschieber im Strahlengang des Interferometers auf, typischerweise im Strahlengang einer der mindestens zwei Teilstrahlen.

Solche Interferometer finden insbesondere in der Messtechnik zur exakten Längenbestimmung oder zur Bestimmung der Bewegung oder Schwingung eines Objekts Anwendung.

Aus EP 0 448 751 B1 ist ein Heterodyninterferometer mit einem Lithiumniobatkristall bekannt. Das Interferometer weist einen polarisationsdrehenden und dabei frequenzversetzenden Konverter auf. Hierbei wird ein Ausgangsstrahl insbesondere mittels zweier akusto-optischer Bauelemente in zwei etwa intensitätsgleiche Teilstrahlen unterschiedlicher Polarisation aufgeteilt, welche Teilstrahlen durch einen Polarisationsteiler getrennt werden.

Aus "Realization of fiber-based laser Dppler vibrometer with serrodyne frequency shifting" von Yanlu Li et al. in Applied Optics Vol.50, No.17 vom 10.Juni 2011 ist ein Wellenleiter-basiertes Heterodyn-Interferometer bekannt, bei dem ein Frequenzschieber im Referenzarm angeordnet ist.

Der Erfindung liegt die Aufgabe zugrunde, die vorbekannten optischen Interferometer weiter zu bilden, insbesondere um die Bauteilreproduzierbarkeit und die Zuverlässigkeit des Interferometers zu erhöhen.

Gelöst ist diese Aufgabe durch ein optisches Interferometer gemäß Anspruch 1. Vorteilhafte Ausgestaltungen des erfindungsgemäßen Interferometers finden sich in den Ansprüchen 2 bis 6 und insbesondere den auf ein erfindungsgemäßes Vibrometer umfassend ein erfindungsgemäßes Interferometer gerichteten Ansprüchen 7 bis 12. Hiermit wird der Wortlaut sämtlicher Ansprüche explizit per Referenz in die Beschreibung einbezogen.

Das erfindungsgemäße Interferometer weist einen Ausgangsstrahl-Strahleingang zum Einkoppeln eines Ausgangsstrahls auf sowie eine Strahlteilervorrichtung zur Aufteilung des Ausgangsstrahls in zumindest einen ersten Teilstrahl und einen zweiten Teilstrahl. Das Interferometer ist als heterodynes Interferometer ausgebildet, indem zumindest ein optischer Frequenzschieber im Strahlengang des Interferometers angeordnet ist. Mittels des Frequenzschiebers kann somit die Frequenz des ersten Teilstrahls zumindest gegenüber der Frequenz des zweiten Teilstrahls verschoben werden, so dass das Interferenzsignal eine Trägerfrequenz aufweist.

Das Interferometer umfasst ein oder mehrere optische Wellenleiterelemente, mittels derer zumindest zwischen Ausgangsstrahl-Strahleingang, Strahlteilervorrichtung und Frequenzschieber optische Wellenleiter ausgebildet sind. Wesentlich ist, dass der Frequenzschieber im Strahlengang des ersten oder des zweiten Teilstrahls angeordnet ist.

Das erfindungsgemäße Interferometer unterscheidet sich im Aufbau somit grundsätzlich von vorbekannten Interferometer, insbesondere dem aus EP 0 448 751 B1 bekannten Interferometer, indem im Strahlengang ausgehend von dem Ausgangsstrahl-Strahleneingang die Strahlteilervorrichtung vor dem Frequenzschieber angeordnet ist.

Hierdurch ergibt sich der Vorteil vorbekannter Aufbauten umfassend Wellenleiterlemente, in dem eine kompakte und robuste Ausgestaltung mit nur geringen und insbesondere auch mit keinerlei Freistrahlkomponenten ausgebildet werden kann und darüber hinaus sind durch die Anordnung des Frequenzschiebers im Strahlengang des ersten oder des zweiten Teilstrahls geringere Anforderungen an die Ausbildung von Strahlteilervorrichtung und Frequenzschieber gestellt: Insbesondere ist es nicht notwendig, Frequenzschieber und Strahlteiler als aufeinander abgestimmte optisch polarisierende Komponenten auszubilden.

In der Auslegung und Parametrisierung von Strahlteilervorrichtung und Frequenzschieber ist somit ein größerer Gestaltungsbereich gegenüber vorbekannten Interferometern unter Beibehaltung der Vorteile der Verwendung von Wellenleiterelementen gegeben. Darüber hinaus zeigten Untersuchungen der Anmelderin, dass die Ausbildung aufeinander abgestimmter polarisierender Strahlteilervorrichtung und Frequenzschieber gemäß zuvor genanntem Stand der Technik sehr hohe Anforderungen an die Produktion solcher optischer Komponenten stellt, so dass nur eine geringe Reproduzierbarkeit erzielt werden kann und daher eine hohe Ausschlussrate und somit hohe Kosten im Herstellungsprozess gegeben sind. Diese Nachteile werden durch das erfindungsgemäße Interferometer vermieden.

Die Erfindung beruht auf der Erkenntnis, dass in einem akustooptischen Frequenzschieber immer unverschobene Frequenzteille zurückbleiben, es Anteile in die entgegengesetzte Shiftrichtung und höhere harmonische Anteile gibt. Diese Störlichtkomponenten beeinflussen die Signaleinenschaften des Interferometers äußerst negativ. Es ist Ziel der Erfindung diese Störanteile dardurch zu minimieren, dass das Licht eines Interferometerarms vor dem Frequenzsschieber mit einem zusätzlichen Strahlteiler, insbesondere einem unpolarisierten Strahlteiler gewonnen wird. Diese Strahlteiler lassen sich insbesondere vorteilhaft in integrierter LiNbO3-Optik viel zuverlässiger als polarisierende Strahlteiler herstellen. Somit steht für einen Interferometerarm sehr rausch- und störungsarmes Licht zur Verfügung. Störlichtanteile können nur im Arm mit dem Frequenzschieber entstehen. Störlicht in der falschen Polarisation kann dazu nach dem Frequenzschieber durch einen Polarisatonsfilter minimiert werden. In der in EP 0 448 751 B1 beschriebenen Lösung werden diese Anteil unvermeidbar im Referenzlicht verwendet, während die hier beschriebene Lösung eine Reduzierung durch Polarisationsfilterung erlaubt. Der Polarisationsteiler im Aufbau von EP 0 448 751 B1 hat auch die Aufgabe eine Verteilung der Strahlleistung in beiden Armen einstellen zu können. Dieser Erfindung hier liegt die Erkenntnis zugrunde, dass diese Aufteilung durch feste oder einstellbare, insbesondere elektronisch einstellbare Teilerverhältnisse in einem nichtpolarisierenden Wellenleiterstrahlteiler bereits vor dem Frequenzschieber erfolgen kann. Somit kann die aus der Freistrahloptik bekannte Anordnung mit einem Polarisationsstrahlteiler nun auch mit Hilfe eines nichtpolarisierenden Wellenleiterstrahlteilers in Wellenleiteroptik übertragen werden.

Vorzugsweise sind die optischen Strahlengänge zumindest zwischen Ausgangsstrahl-Strahleingang, Strahlteilervorrichtung und Frequenzschieber ausschließlich als Wellenleiter mit oder insbesondere bevorzugt ohne Zwischenschaltung weiterer optischer Komponenten ausgebildet. Hierdurch wird ein robuster Aufbau erzielt und Intensitätsverluste, welche beim Ein- und Auskoppeln von optischen Freistrahlen in Wellenleiterelemente entstehen, werden vermieden. Insbesondere ist es daher vorteilhaft, dass zumindest zwischen Ausgangsstrahl-Strahleingang, Strahlteilervorrichtung und Frequenzschieber das erfindungsgemäße Interferometer in einer vorzugsweisen Ausführungsform keinen optischen Freistrahl aufweist, d. h. keinen Strahlengang außerhalb eines Wellenleiters, insbesondere keinen Freistrahl als Strahlengang in der Umgebungsatmosphäre.

Das Wellenleiterelement des erfindungsgemäßen Interferometers ist bevorzugt als planarer Wellenleiter und/oder optische Faser ausgebildet. Insbesondere bevorzugt sind alle Wellenleiterelemente des erfindungsgemäßen Interferometers ist bevorzugt als planarer Wellenleiter und/oder optische Faser ausgebildet.

Es liegt im Rahmen der Erfindung, die Strahlengänge des Interferometers teilweise, mittels planarer Wellenleiter und teilweise mittels optischer Fasern auszubilden. Ein besonderer robuster Aufbau wird erzielt, indem zumindest zwischen Ausgangsstrahl-Strahleingang, Strahlteilervorrichtung und Frequenzschieber sämtliche optische Strahlengänge ausschließlich mittels planarer Wellenleiter ausgebildet sind. Bei Verwendung optischer Fasern können insbesondere an sich bekannte Glasfasern verwendet werden.

Insbesondere ermöglicht die Verwendung von Fasern das Verbinden des optischen Interferometers mit weiteren Komponenten, beispielsweise der Lichtquelle oder einer Messoptik mittels handelsüblicher Stecker für optische Fasern, insbesondere mittels FC/APC-Steckern.

In einer weiteren vorzugsweisen Ausführungsform des erfindungsgemäßen Interferometers ist die Strahlteilervorrichtung nicht polarisierend ausgebildet. Untersuchungen der Anmelderin haben ergeben, dass hierdurch gegenüber aus dem Stand der Technik bekannten mittels Wellenleiter ausgebildeten Interferometern Störfrequenzen unterdrückt werden, wie zuvor beschrieben. Erfindungsgemäß ist der Frequenzschieber als doppelbrechender Wellenleiter ausgebildet. Hierdurch kann einerseits der Frequenzschieber direkt mit optischen Wellenleiterelementen des Interferometers verbunden werden, so dass Intensitätsverluste vermieden werden. Darüber hinaus zeigen aus dem Stand der Technik bekannte Frequenzschieber wie beispielsweise Bragg-Zellen Nachteile insbesondere aufgrund deren Temperaturabhängigkeit, welche durch als doppelbrechende Wellenleiter ausgebildete Frequenzschieber vermieden werden.

Der Frequenzschieber ist somit vorzugsweise als akustooptischer Frequenzschieber ausgebildet.

Besonders vorteilhaft ist es, den Frequenzschieber als piezoelektrisch beeinflussbaren Wellenleiter auszubilden. Hierdurch ist eine einfache Ansteuerung des Frequenzschiebers mittels einer entsprechend ausgebildeten elektronischen Steuereinheit in an sich bekannter Weise möglich. Vorteilhafterweise ist der Frequenzschieber somit derart ausgebildet, dass eine akustische Oberflächenwelle mit Hilfe eines elektroakustischen Umsetzers erzeugt wird und dann in einem ausgewählten Bereich des Wellenleiters mit dem Licht so wechselwirkt, das ein Teil des Lichts in die andere Polarisationsrichtung frequenzverschoben konvertiert werden. Insbesondere ist es vorteilhaft, den Frequenzschieber als Lithium-Niobat-Frequenzschieber auszubilden, vorzugsweise als LiNbO₃-Frequenzschieber wie beispielsweise aus EP 0 448 751 B1 bekannt.

Durch die Ausbildung des Frequenzschiebers als doppelbrechender Wellenleiter wird mittels des Frequenzschiebers eine Polarisation frequenzverschoben in die zweite Polarisationsrichtung überführt. Dazu werden vorzugsweise mit Hilfe von Temperatur (beeinflusst wellenlängenabhängigen Brechungsindex), Wellenlänge und/oder Shiftfrequenz genau auf die Impuls- und Energiebedingungen für die Frequenzverschiebung eingestellt. Erfindungsgemäß weist das Interferometer daher zumindest einen Polarisationsfilter auf, welcher in dem Teilstrahl, indem der Frequenzschieber angeordnet ist, dem Frequenzschieber nachfolgend angeordnet ist, so dass der Frequenzschieber zwischen Polarisationsfilter und Strahlteilervorrichtung angeordnet ist. Der Polarisationsfilter ist mit dem Frequenzschieber zusammenwirkend ausgebildet, so dass der Polarisationsfilter lediglich Licht mit der Polarisation des durch den Frequenzschieber frequenzverschobenen Lichts hindurchlässt. Hierdurch wird der frequenzverschobene Lichtstrahl mittels des Polarisationsfilters "gereinigt", indem etwaige weitere Strahlkomponenten mit anderer Polarisierung im Polarisationsfilter absorbiert werden.

In einer weiteren vorteilhaften Ausführungsform weist das optische Interferometer zumindest einen Zusatzfrequenzschieber auf. Der Frequenzschieber ist im Strahlengang eines Teilstrahls, der Zusatzfrequenzschieber im Strahlengang des anderen der beiden Teilstrahlen angeordnet. Der Zusatzfrequenzschieber ist derart ausgebildet, dass er eine Frequenzänderung entgegengesetzt zur Frequenzänderung des Frequenzschiebers bewirkt. In dieser vorteilhaften Ausführungsform wird somit durch den Zusatzfrequenzschieber eine erhöhte Frequenzdifferenz zwischen erstem und zweitem Teilstrahl erzeugt. Weiterhin weist die Verwendung von Frequenzschieber und Zusatzfrequenzschieber gegenüber der Verwendung lediglich eines Frequenzschieber mit entsprechend großer Frequenzbeeinflussung den Vorteil auf, dass eine kleinere Trägerfrequenz des Interferenzsignals ausgebildet wird.

In einer weiteren vorteilhaften Ausführungsform des erfindungsgemäßen Interferometers ist der Strahlteiler zur Aufteilung von zumindest zwei Teilstrahlen mit unterschiedlichen Intensitäten ausgebildet. Diese vorzugsweise Ausführungsform ist in der Erkenntnis der Anmelderin begründet, dass für typische Anwendung und insbesondere bei Integration des erfindungsgemäßen Interferometers in ein Vibrometer, wie nachfolgend beschrieben, es vorteilhaft ist, wenn ein Teilstrahl, eine höhere Intensität aufweist. Vorzugsweise weist der erste Teilstrahl eine Intensität größer gleich 60 %, vorzugsweise größer gleich 70 %, weiter bevorzugt größer gleich 80 %, insbesondere etwa 85% der Gesamtintensität der beiden Teilstrahlen auf. Es ist somit insbesondere eine Teilungsverhältnis erster Teilstrahl zu zweiter Teilstrahl im Verhältnis 60 zu 40 bis 90 zu 10, vorzugsweise 70 zu 30 bis 85 zu 15 vorteilhaft.

Vorteilhafterweise ist der Strahlteiler ausgebildet, ein wahlweise vorgebbares Intensitätsverhältnis zu erzeugen, insbesondere gemäß der zuvor als vorteilhaft beschriebenen Intensitätsverhältnisse. Hierdurch kann das Intensitätsverhältnis zwischen erstem und zweitem Messstrahl den Messbedingungen angepasst werden. Insbesondere ist ein elektronisch regelbarer Strahlteiler vorteilhaft.

Das erfindungsgemäße Interferometer ist für eine Vielzahl von Anwendungen für Einstrahl- sowie Mehrkanal-Vibrometer geeignet, wie beispielsweise in allen heterodynen Interferometern, die mit IR-Licht bei 1550 nm eingesetzt werdem. Die Heterodyne kohärente Verstärkung, die durch den Aufbau möglich wird, erlaubt eine schrotrauschbegrenste Detektion von Phase aber auch über Amplitudenmodulation für Intensität. Daher ist der Shifter auch für die Telekommunikation, für LIDAR, und für die Frequenzkammerzeugung vorteilhaft verwendbar.

Insbesondere ist das erfindungsgemäße Interferometer zur Integration in ein Vibrometer geeignet:
Die Erfindung umfasst daher ein Vibrometer zur interferometrischen Vermessung eines Objekts, umfassend eine Strahlungsquelle, ein erfindungsgemäßes Interferometer oder eine vorzugsweise Ausführungsform hiervon, eine optische Überlagerungseinrichtung und zumindest einen ersten Detektor. Strahlungsquelle und Interferometer sind derart zusammenwirkend ausgebildet, dass ein von der Strahlungsquelle erzeugter Lichtstrahl als Ausgangsstrahl in den Ausgangsstrahl-Strahleingang des Interferometers einkoppelbar ist.

Das Interferometer ist dahingehend in an sich bekannter Weise ausgebildet, dass der erste Teilstrahl als Messstrahl auf das zu vermessende Objekt abbildbar ist und Überlagerungsvorrichtung und erster Detektor derart zusammenwirkend ausgestaltet sind, dass der von dem Objekt zumindest teilweise reflektierte Messstrahl als Empfangsstrahl und der Referenzstrahl auf mindestens einer Detektorfläche des ersten Detektors zumindest teilweise überlagert sind, um eine Interferenz auszubilden. Das erfindungsgemäße Vibrometer kann somit grundsätzlich dem Aufbau vorbekannter heterodyner Interferometer entsprechen. Wesentlich ist jedoch, dass das Interferometer des Vibrometers als erfindungsgemäßes Interferometer bzw. eine vorzugsweise Ausführungsform hiervon ausgebildet ist.

Mittels des erfindungsgemäßen Vibrometers kann in an sich bekannter Weise die Bewegung der Objektoberfläche des zu vermessenden Objekts in Richtung der optischen Achse des Messstrahls sowie aufgrund des heterodynen Aufbaus auch die Bewegungsrichtung der Objektoberfläche bestimmt werden.

Das erfindungsgemäße Vibrometer kann hierbei derart ausgebildet sein, dass der erste Teilstrahl der Messstrahl ist.

Vorzugsweise weist das Vibrometer eine Abbildungsoptik zur Abbildung des Messstrahls auf einen zugeordneten Messpunkt auf der Oberfläche des zu vermessenden Objekts auf. Insbesondere ist Abbildungsoptik vorteilhafterweise ausgebildet zur Fokussierung des Messstrahls auf entfernte Messobjekte, insbesondere mehr als 5 m, mehr als 10 m, insbesondere mehr als 100 m entfernte Messobjekte.

Vorzugsweise sind hierbei zwischen Abbildungsoptik und Interferometer die Strahlengänge von Messstrahl und Empfangsstrahl mittels Wellenleiterelementen, insbesondere mittels optischer Fasern ausgebildet. Hierdurch ergibt sich der Vorteil, dass ein robuster Aufbau erzielt wird und kein räumliche Justierung zwischen Abbildungsoptik und Interferometer, sondern lediglich zwischen Abbildungsoptik und einem Einkoppelpunkt der Wellenleiterelemente notwendig ist.

Bei dem erfindungsgemäßen Vibrometer ist es vorteilhaft, dass - wie zuvor beschrieben - der Strahlteiler zur Aufteilung von zumindest zwei Teilstrahlen mit unterschiedlichen Intensitäten ausgebildet ist. Vorzugsweise weist der Messstrahl hierbei eine höhere Intensität gegenüber dem Referenzstrahl auf, insbesondere eine Intensität größer gleich 60 %, vorzugsweise größer gleich 70 %, weiter bevorzugt größer gleich 80 % der Gesamtintensität von Mess- und Referenzstrahl.

Diese vorzugsweise Ausführungsform weist den Vorteil auf, dass typischerweise eine relativ geringe Intensität des Referenzlichts genügt, um ein ausreichend auswertbares Interferenzsignal mittels des Detektors zu erzielen, insbesondere um die Schrotrauschgrenze zu erreichen. Bei dem Messstrahl ist hingegen eine möglichst hohe Intensität erwünscht, insbesondere sofern das zu vermessende Objekt nicht spiegelnde und/oder streuende Oberflächen aufweist.

Es ist daher insbesondere vorteilhaft, den Frequenzschieber im Strahlengang des Referenzstrahls anzuordnen, da auch bei Durchgang durch einen Frequenzschieber entstehen Verluste durch Konversion und die Intensität wirdzumindest geringfügig verringert.

Vorzugsweise ist das erfindungsgemäße Vibrometer als Mehrkanal-Vibrometer ausgebildet. Hierbei sind ein zusätzlicher Messstrahl-Strahlteiler und ein zusätzlicher Referenzstrahl-Strahlteiler vorgesehen. Mittels des Messstrahl-Strahlteilers wird eine Vielzahl von Messteilstrahlen erzeugt, die jeweils auf das zu vermessende Objekt, vorzugsweise auf unterschiedliche Ortspunkte auf der Oberfläche des zu vermessenden Objekts, abgebildet werden und die von dem Objekt reflektierten und/oder gestreuten Messteilstrahlen treten als Empfangsteilstrahlen wieder in den Strahlengang des Vibrometers ein. Entsprechend wird mittels des Referenzstrahl-Strahlteilers der Referenzstrahl in mehrere Referenzteilstrahlen aufgeteilt. Das Vibrometer umfasst zumindest für jeden Messteilstrahl einen Detektor, auf welchem Detektor der zu dem Messteilstrahl zugeordnete Empfangsteilstrahl mit einem Referenzteilstrahl überlagert wird.

In dieser vorteilhaften Ausgestaltung ist somit insbesondere eine ortsaufgelöste Vermessung des Objekts möglich, ohne dass ein scannendes Verfahren angewendet werden muss. Ebenso liegt es im Rahmen der Erfindung, zusätzlich zu der ortsaufgelösten Messung ein scannendes Verfahren zum Durchführen mehrerer nebeneinander liegender ortsaufgelöster Messungen durchzuführen.

Vorzugsweise ist der Detektor des Vibrometers als "Balanced Detector" ausgebildet. Bei einer solchen an sich bekannten Ausbildung eines Detektors weist der Detektor zumindest zwei Teildetektoren auf, wobei auf jeden Teildetektor jeweilsein Paar von Messteilstrahl und Referenzteilstrahl überlagert werden. Aus den Messsignalen der beiden Teildetektoren wird ein gemeinsames Messsignal in an sich bekannter Weise ermittelt. Solche Balanced Detektoren werden auch als differentielle Detektoren bezeichnet. Insbesondere ist es bei Ausbildung des Vibrometers als Mehrkanalvibrometer vorteilhaft, die Detektoren aller Teilstrahlen jeweils als Balanced Detektoren auszubilden.

In einer weiteren vorteilhaften Ausführungsform ist das erfindungsgemäße Vibrometer zur Auswertung der Messsignale nach dem Prinzip der Empfangs-Diversität als "Diversity-Vibrometer", insbesondere gemäß DE102012211549 ausgebildet:
Hierzu ist die Strahlteilervorrichtung zur Aufteilung des Ausgangsstrahls in einen Messstrahl, einen ersten Referenzteilstrahl und mindestens einen zweiten Referenzteilstrahl und zur Aufteilung des Empfangsstrahls in einen ersten Empfangsteilstrahl und mindestens einen zweiten Empfangsteilstrahl ausgebildet. Das Vibrometer weist mindestens einen zweiten Detektor auf und ist derart ausgebildet, dass der erste Empfangsteilstrahl mit dem ersten Referenzteilstrahl auf einer Detektionsfläche des ersten Detektors und der zweite Empfangsteilstrahl mit dem zweiten Referenzteilstrahl auf einer Detektionsfläche des zweiten Detektors überlagert sind, jeweils unter Ausbildung einer optischen Interferenz. Das Vibrometer umfasst eine Auswerteeinheit zur Auswertung der Messsignale des ersten und des zweiten Detektors. Diese Auswerteeinheit ist ausgebildet, die Messsignale der beiden Detektoren nach dem Prinzip der Empfangs-Diversität auszuwerten. Hierbei ist es vorteilhaft, den Frequenzschieber im Strahlengang des Messstrahls anzuordnen, da im Strahlengang des Referenzstrahls bereits die Strahlteilervorrichtung zur Aufteilung des Referenzstrahls in mindestens zwei Referenzteilstrahlen angeordnet ist.

Diese vorteilhafte Ausgestaltung als Diversity-Vibrometer ist in der Erkenntnis des Anmelders begründet, dass häufig Objektoberflächen den Messstrahl derart beeinflussen, dass eine Verringerung der Messgenauigkeit oder sogar ein Messausfall resultiert:
Der breiten Verwendbarkeit von Vorrichtungen zu interferometrischen Vermessungen eines Objekts und insbesondere Vibrometern ist es geschuldet, dass diese Vorrichtungen nicht nur zur Vermessung von Objekten mit einer als ideal anzusehenden optisch spiegelnden Oberfläche Anwendung finden, sondern auch zur Vermessung von Objekten mit unkooperativen und insbesondere rauen Oberflächen eingesetzt werden. Von einer rauen Oberfläche wird der Messstrahl typischerweise diffus gestreut und die Intensitätsverteilung des Empfangsstrahls ist daher von Speckle geprägt. Die Speckle rühren daher, dass die Phasenunterschiede des Messstrahls, der aufgrund der Rauigkeit der Oberfläche des Messobjekts an verschieden zu der Vorrichtung beabstandeten Objektpunkten gestreut wird, dazu führen, dass sich in jeder Richtung unabhängig die resultierende Gesamtintensität zu stark voneinander abweichenden Werten ergibt. Je nach Beschaffenheit und Ausrichtung der vermessenen Oberfläche kann somit eine sehr hohe Gesamtintensität resultieren; ebenso ist es jedoch möglich, dass sich aufgrund der Phasenunterschiede eine sehr geringe oder sogar eine Intensität 0 ergibt. Auch auf der Detektorfläche des Detektors führt die Interferenz vieler gestreuter Lichtbeiträge mit unterschiedlicher Phase dazu, dass die Gesamtintensität stark schwankt.

Da der Rauschpegel der auf dem Objekt zu messenden Position oder Geschwindigkeit mit sinkender Signalstärke ansteigt, ist die Qualität der Messung somit von dem Speckle-Muster abhängig. Das Speckle-Muster ist jedoch veränderlich und schwankt insbesondere abhängig von dem aktuellen Messpunkt und Ausrichtung der Oberfläche des Objekts.

Darüber hinaus werden die vorgenannten Phasenunterschiede zwischen den Speckles als scheinbare Bewegung gemessen: Aufgrund der Phasenunterschiede zwischen den Speckles können tiefe Einbrüche in der Stärke des Messsignals entstehen (sogenannte "Dropouts"), da sich die Lichtbeiträge gegenseitig vollständig aufheben können. Die Auswertung der Messsignale des Detektors ergibt dann einen scheinbaren Sprung in der Position der vermessenen Oberfläche des Objekts, wobei der Sprung etwa einem Viertel der verwendeten Wellenlänge des Messstrahls entspricht. Hieraus resultiert entsprechend ein hoher Peak, beispielsweise in der ausgewerteten Geschwindigkeit, der jedoch keine Entsprechung in der realen Bewegung des Objekts findet.

Wenn darüber hinaus eine scannende Messung durchgeführt wird, bei welcher der Messstrahl über eine Vielzahl von Messpunkten auf dem Objekt bewegt wird und/oder wenn die Strahlungsquelle der Vorrichtung und die Oberfläche des Objekts nicht optimal zueinander fixiert sind und/oder wenn sich durch atmosphärische Schlieren-Effekte eine Ablenkung des Messstrahls ergibt, ändert sich das empfangene Speckle-Muster und das auswertbare Signal wird verfälscht und insbesondere zeitweise tiefe Signaleinbrüche aufweisen.

Das Diversity-Vibrometer nutzt nun die Erkenntnis, dass die vorgenannten Signaleinbrüche typischerweise zufällig (aber dennoch statistisch beschreibbar) auftreten und bei üblichen Messbedingungen nur einen niedrigen Prozentsatz der Messzeit bzw. der zu vermessenden Messpunkte auf der Oberfläche des Objekts betreffen. Wenn nun zwei oder mehrere unabhängige Rohsignale zu unterschiedlichen Zeiten die vorgenannten Dropouts aufweisen und die Rohsignale statistisch unabhängig oder zumindest in etwa oder bevorzugt im Wesentlichen statistisch unabhängig sind, dann ist die Wahrscheinlichkeit, dass bei zwei Messkanälen gleichzeitig ein Einbruch auftritt, das Produkt der Wahrscheinlichkeit dessen für jeden einzelnen Kanal. Diese kombinierte Wahrscheinlichkeit ist sehr viel geringer als für einen einzelnen Kanal. Dies bedeutet somit, dass die Wahrscheinlichkeit der vorgenannten Dropouts erheblich verringert werden kann.

Das Prinzip der Empfangs-Diversität ist auf dem technischen Gebiet der Funkübertragung bekannt und wird dort auch als Antennen-Diversität bezeichnet. Bei einer Antennen-Diversität weist ein Empfangsgerät für Funktionssignale mindestens zwei Antennen auf, deren Signale jeweils hinsichtlich des Pegels oder besten Rauschabstandes bewertet werden und anhand dieser Bewertung wird eines der Signale zur Auswertung verwendet.

Das Diversity-Vibrometer überträgt nun das Prinzip der Empfangs-Diversität auf die interferometrische Vermessung eines Objekts:
Durch die Aufteilung des Referenzstrahls in ersten und zweiten Referenzteilstrahl sowie des Empfangsstrahls in ersten und zweiten Empfangsteilstrahl und die entsprechende Überlagerung wie vorhergehend beschrieben auf den Detektionsflächen des ersten und zweiten Detektors stehen somit separate Messsignale von mindestens zwei Detektoren zur Verfügung, welche in Analogie mit den beiden Empfängern bei der Antennen-Diversität verglichen werden können.

Auch bei dem Diversity-Vibrometer ist wesentlich, dass anhand eines Gütekriteriums, welches eine Bewertung der Güte der Messdaten des ersten Detektors im Vergleich mit der Güte der Messdaten des zweiten Detektors ermöglicht, eine Auswertung erfolgt, welche abhängig von den jeweils ermittelten Gütewerten aus entweder lediglich einem Messsignal von einem der beiden Detektoren oder einem kombinierten Messsignal beider Detektoren besteht, wobei auch vorgenannte Kombination eine Wichtung abhängig von der angelegten Güte beinhalten kann.

Wesentlich für das Diversity-Vibrometer ist somit nicht nur, dass eine Auswertung von Daten des Empfangsstrahls mittels zweier Detektoren erfolgt, sondern dass mittels der beiden Detektoren der Empfangsstrahl hinsichtlich unterschiedlicher Kriterien ausgewertet wird. Mittels des ersten Detektors wird somit zumindest teilweise eine andere in dem Empfangsstrahl enthaltene Information ausgewertet, verglichen mit der (zumindest teilweise) mittels des zweiten Detektors ausgewerteten Information des Empfangsstrahls.

Untersuchungen des Anmelders haben ergeben, dass die vorgenannte Informationstrennung der im Empfangsstrahl enthaltenen Informationen und Zuordnung einerseits zu dem ersten Detektor und andererseits zu dem zweiten Detektor bevorzugt hinsichtlich mindestens eines der folgenden Kriterien durchgeführt wird:

### a) Trennung hinsichtlich der Polarisation

Hierbei werden unterschiedliche Polarisationsanteile des Empfangsstrahls auf den ersten und zweiten Detektor abgebildet. Dies ist insbesondere bei zu vermessenden Objekten, welche eine diffus streuende Oberfläche aufweisen, vorteilhaft. Insbesondere nichtmetallische Oberflächen sind typischerweise diffus streuende Flächen. Es ist bekannt, dass Licht, welches an nichtmetallischen Oberflächen diffus gestreut wird, seine vorher definierte Polarisation verliert und somit zufällig polarisiert ist, siehe Goodman, Jospeh W., "Speckle phenomena in optics", Seite 47 ff, 2007 Roberts and Company Publishers.

Insbesondere bei solchen diffus streuenden Oberflächen bietet eine Auftrennung hinsichtlich der Polarisation somit eine kostengünstig realisierbare Möglichkeit, an den ersten und zweiten Detektor Messsignale zu erzeugen, wobei die Signaleinbrüche der Messsignale des ersten Messdetektors statistisch unabhängig oder zumindest im Wesentlichen statistisch unabhängig zu den Signaleinbrüchen der Messsignale des zweiten Messdetektors sind.

### b) Räumliche Trennung

Hierbei wird der Empfangsstrahl in mindestens einen ersten und einen zweiten Unterbereich des Strahlquerschnitts räumlich aufgeteilt und der erste Unterbereich zu dem ersten Detektor und der zweite Unterbereich zu dem zweiten Detektor weitergeleitet.
Es erfolgt somit eine räumliche Aufteilung, indem Unterbereiche des Strahlquerschnitts entweder zu Detektor 1 oder zu Detektor 2 weitergeleitet werden. In einer vorzugsweisen Ausführungsform wird der Empfangsstrahl in eine rechte Hälfte als ersten Unterbereich und eine linke Hälfte als zweiten Unterbereich aufgeteilt, d.h. der Strahlquerschnitt wird hälftig dem ersten und hälftig dem zweiten Unterbereich zugeordnet.

Bei dieser Variante erfolgt somit eine Aufteilung der räumlichen Information des Empfangsstrahls. Untersuchungen des Anmelders haben ergeben, dass insbesondere bei metallischen Oberflächen eine solche räumliche Auftrennung des Empfangsstrahls ebenfalls die gewünschte statistische Unabhängigkeit oder zumindest im Wesentlichen statistische Unabhängigkeit der Signaleinbrüche der Signale des ersten Detektors zu den Signaleinbrüchen der Messsignale des zweiten Detektors bewirkt.

### c) Modenaufteilung

Hierbei erfolgt eine Aufteilung des Empfangsstrahls derart, dass zu dem Detektor 1 zumindest teilweise unterschiedliche Strahlmoden, insbesondere Strahl-Transversalmoden geleitet werden, gegenüber Detektor 2. Beispielsweise kann zu Detektor 1 lediglich eine Gauß-Grundmode des Empfangsstrahls geleitet werden und auf den Detektor 2 lediglich weitere Anteile des Empfangsstrahls, insbesondere höhere Strahlmoden ohne Gauß-Grundmode.

Auch die Aufteilung hinsichtlich verschiedener Strahlmoden des Empfangsstrahls bewirkt, dass die Signaleinbrüche der Messsignale des ersten Detektors statistisch unabhängig oder zumindest näherungsweise statistisch unabhängig zu den Signaleinbrüchen der Messsignale des zweiten Detektors sind.

Das Diversity-Vibrometer kann hierbei analog zu einer Ausgestaltung gemäß DE102012211549.8 ausgebildet sein. DE102012211549.8 wird explizit per Referenz in die Beschreibung einbezogen.

Weitere vorzugsweise Merkmale und Ausführungsformen werden im Folgenden anhand von Figuren beschrieben. Dabei zeigt:
- Figur 1: ein Ausführungsbeispiel des erfindungsgemäßen Interferometers;
- Figur 2: ein Ausführungsbeispiel eines erfindungsgemäßen Vibrometers, welches als Mehrkanal-Vibrometer ausgebildet ist und
- Figur 3: ein Ausführungsbeispiel eines erfindungsgemäßen Vibrometers, welches Messungen nach dem Prinzip der Empfangs-Diversität ermöglicht.

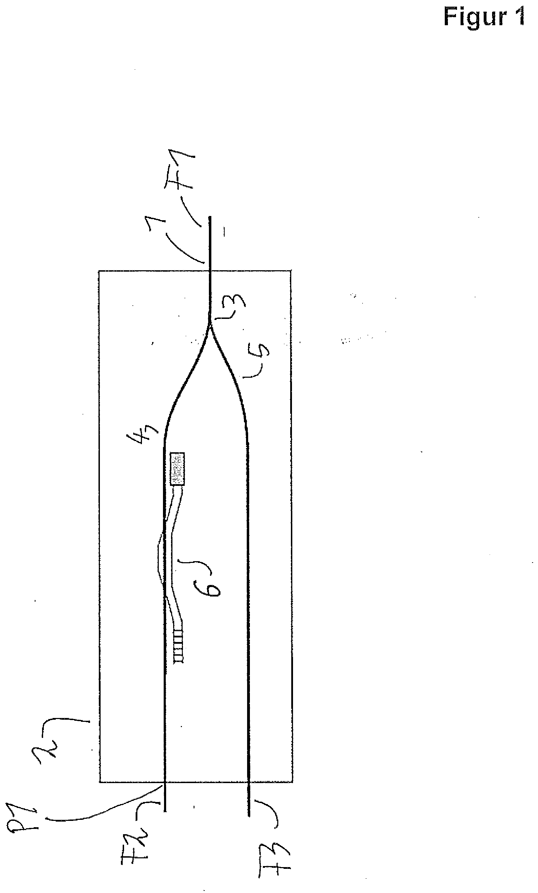

In den Figuren 1 bis 3 sind schematische Darstellungen gezeigt. Gleiche Bezugszeichen bezeichnen in den Figuren gleiche oder gleichwirkende Elemente.

Figur 1 zeigt ein Ausführungsbeispiel eines erfindungsgemäßen Interferometers. Das optische Interferometer weist einen Ausgangsstrahl-Strahleingang 1 auf, der als Fasereingang ausgebildet ist: Eine erste optische Faser F1 ist vorgesehen, um Licht einer Strahlungsquelle in die erste optische Faser F1 einzukoppeln. Das optische Interferometer weist eine planare Wellenleiterstruktur 2 auf. In dieser planaren Wellenleiterstruktur sind sämtliche Strahlengänge als plananre Wellenleiter ausgebildet.

Die planare Wellenleiterstruktur ist als LiNbO₃-Wellenleiterstrukt ausgebildet.

Die erste optische Faser F1 koppelt den Ausgangsstrahl an dem Ausgangsstrahl-Strahleingang in die planare Wellenleiterstruktur 2 ein. Der Ausgangsstrahl wird mittels einer Strahlteilervorrichtung 3 in einen ersten Teilstrahl 4 und einen zweiten Teilstrahl 5 aufgespaltet.

Das Interferometer ist als heterodynes Interferometer ausgebildet, in dem im Strahlengang des ersten Teilstrahls 4 ein optischer Frequenzschieber 6 vorgesehen ist, welcher als LiNbO₃-Frequenzschiebe ausgebildet ist.

Der erste Teilstrahl wird nach Durchlaufen des Frequenzschiebers 6 in eine zweite optische Faser F2 und der zweite Teilstrahl 5 in eine dritte optische Faser F3 eingekoppelt.

Durch die Ausbildung sämtlicher Strahlengänge mittels optischer Fasern bzw. planarer Wellenleiter und durch die Verwendung des LiNbo₃-Frequenzschiebers wird ein äußerst robuster und gut reproduzierbarer Aufbau erzielt, der darüber hinaus kompakt ausgebildet werden kann.

Weiterhin ist die Strahlteilervorrichtung 3 als nicht polarisierender Strahlteiler ausgebildet, so dass die Reproduzierbarkeit weiter erhöht wird.

Die Strahlteilervorrichtung 3 ist weiterhin derart ausgebildet, dass der Ausgangsstrahl in einem Intensitätsverhältnis von etwa 20 zu 80 aufgeteilt wird, so dass der erste Teilstrahl 4 eine geringere Intensität gegenüber dem zweiten Teilstrahl 5 aufweist. Ebenso kann der Frequenzschieber 6 im Strahlengang des zweiten Teilstrahls 5, mit der gegenüber dem ersten Teilstrahl 4 geringeren Intensität angeordnet sein.

Weiterhin kann im Strahlengang desjenigen Teilstrahls, in welchem der Frequenzschieber 6 angeordnet ist, gemäß Figur 1 vorliegend somit im Strahlengang des ersten Teilstrahls 4 am Übergang zwischen planarer Wellenleiterstruktur 2 und zweiter optischer Faser F2 ein Polarisationsfilter (Bezugszeichen P1) vorgesehen sein, der auf die Polarisation des mittels des Frequenzschiebers 6 frequenzverschobenen Lichtstrahls abgestimmt ist, so dass etwaige weitere Lichtstrahlkomponenten des ersten Teilstrahls 4, welche nicht die durch den Frequenzschieber 6 vorgegebenen Polarisation aufweisen, mittels des Polarisationsfilters P1 herausgefiltert werden und somit der erste Teilstrahl 4 "bereinigt" wird.

Das Interferometer gemäß Figur 1 weist weiterhin nicht dargestellte optische Elemente auf, um den ersten Teilstrahl mit dem zweiten Teilstrahl zur Ausbildung einer Interferenz zu überlagern.

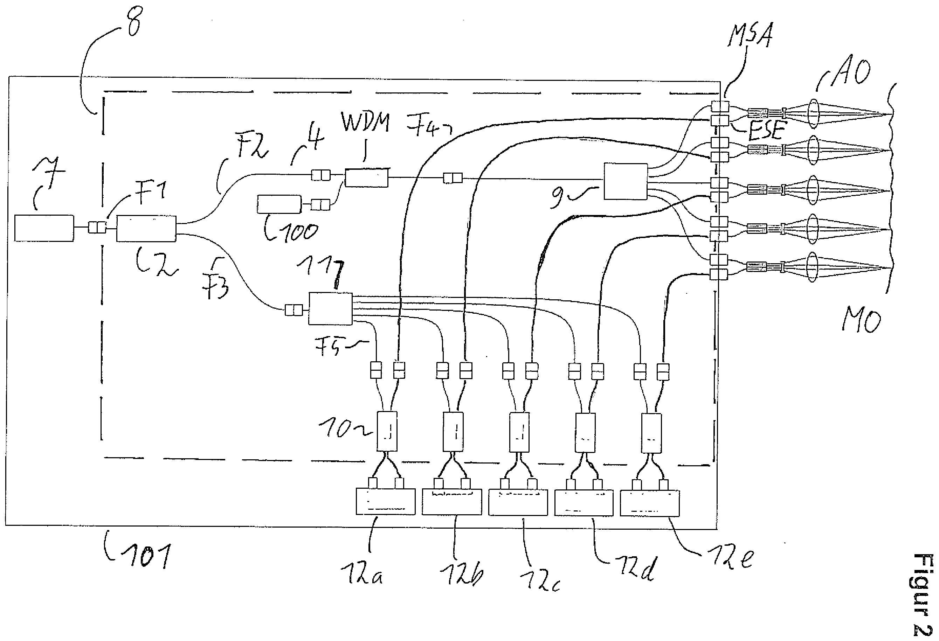

In Figur 2 ist ein erstes Ausführungsbeispiel eines erfindungsgemäßen Vibrometers gezeigt, welches als Mehrkanal-Vibrometer ausgebildet ist.

Das Vibrometer umfasst eine Strahlungsquelle 7 zur Erzeugung eines Ausgangsstrahls im IR-Bereich, beispielsweise mit einer Wellenlänge von 1550 nm. Der Ausgangsstrahl der Strahlungsquelle 7 wird direkt in eine optische Faser eingekoppelt, welche mittels eines handelsüblichen FC/APC-Steckers mit einer ersten optischen Faser F1 eines (mit einer gestrichelten Linie umrandeten) Interferometers 8 des Vibrometers verbunden ist.

Das Interferometer 8 weist eine planare Wellenleiterstruktur 2 auf, welche identisch zu der planaren Wellenleiterstruktur 2 gemäß Figur 1 ausgebildet und weist die in Figur 1 gezeigten und in Figur 2 nicht dargestellten Komponenten auf:
Der mittels der ersten optischen Faser F1 in die planare Wellenleiterstruktur 2 eingekoppelte Ausgangsstrahl wird mittels einer Strahlteilervorrichtung 3, welche als nicht polarisierender Strahlteiler ausgebildet ist, in einen ersten Teilstrahl 4 und einen zweiten Teilstrahl 5 aufgespaltet. Im Strahlengang des ersten Teilstrahls 4 ist ein als LiNbO₃-Frequenzschieber ausgebildeter Frequenzschieber angeordnet. Der erste Teilstrahl 4 wird in eine zweite optische Faser F2 und der zweite Teilstrahl 5 in eine dritte optische Faser F3 eingekoppelt.

Die Strahlteilervorrichtung 3 ist derart ausgebildet, dass der erste Teilstrahl in etwa 80% der Gesamtintensität von erstem und zweitem Teilstrahl aufweist.

Der erste Teilstrahl 4 dient in dem Vibrometer gemäß Figur 2 als Messstrahl: Über mehrere optische Fasern wird der erste Teilstrahl 4 zu einem Messstrahl-strahlteiler 9 geleitet und mittels diesem in fünf Messstrahlen mit in etwa gleicher Intensität aufgeteilt. Die fünf Messstrahlen werden ebenfalls mittels optischer Fasern zu Messstrahl-Strahlausgängen (siehe beispielhaft Bezugszeichen MSA für einen ersten Messstrahl-Strahlausgang) geleitet. Dort sind weitere optische Fasern angeschlossen, die den jeweiligen Messteilstrahl zu einer Abbildungsoptik (beispielhaft Abbildungsoptik AO in Figur 2 für den ersten Messteilstrahl) geleitet werden. Mittels der Abbildungsoptik wird der Messteilstrahl auf einen zugeordneten Messpunkt auf der Oberfläche des zu vermessenden Objekts MO abgebildet. Der zumindest teilweise reflektierte und/oder gestreute Teilmessstrahl wird als Empfangsstrahl über die Abbildungsoptik AO wiederrum in eine optische Faser eingekoppelt und zu einem Empfangsstrahl-Strahleingang des Vibrometers (beispielhaft Bezugszeichen ESE in Figur 2 für den Empfangsstrahlstrahleingang des ersten Empfangsteilstrahls). An jedem Empfangsteilstrahl-Strahleingang ist jeweils eine optische Faser angeordnet (beispielhaft vierte optische Faser F4 für den ersten Empfangsteilstrahl). Mittels der vierten optischen Faser F4 wird der erste Empfangsteilstrahl zu einem ersten Balanced-Strahlteiler 10 geleitet.

Der zweite Teilstrahl 5, welcher in die dritte optische Faser F3 eingekoppelt wird, dient als Referenzstrahl:
Der Referenzstrahl wird mittels optischer Fasern zu einem Referenzstrahl-Strahlteiler 10 geleitet und in fünf Referenzteilstrahlen mit in etwa gleicher Intensität aufgeteilt.

Wie beispielhaft für den ersten Referenzteilstrahl beschrieben, wird dieser mittels einer fünften optischen Faser F5 und weiteren optischen Fasern ebenfalls zu dem Balanced-Strahlteiler 10 geleitet. Mittels des Balanced-Strahlteilers 10 werden erster Referenzteilstrahl und erster Empfangsteilstrahl überlagert und dieser Überlagerungsstrahl in an sich für Balanced-Detektoren bekannter Weise in zwei Teilstrahlen aufgeteilt, vorliegend mittels eines Polarisationsstrahlteilers.

Ein erster Detektor 12a weist entsprechend zwei Teildetektoren auf, auf deren Detektionsfläche jeweils einer der beiden Balanced-Teilstrahlen abgebildet wird, so dass eine Signalauswertung in an sich bekannter Weise für Balanced-Detektoren möglich ist.

Analog ist die Strahlführung für vier weitere Balanced-Detektoren 12b bis 12e ausgebildet.

Mittels des Vibrometers gemäß Figur 2 ist somit eine nicht scannende, ortsaufgelöste Vermessung von fünf ortsverschiedenen Messpunkten auf dem Objekt MO möglich, wobei für jeden Messpunkt jeweils eine Auswertung gemäß einer Balanced-Detektorauswertung erfolgt.

Für viele Applikationen ist es für den Anwender wichtig, den Messtrahl zu sehen. Daher wird in diesem Ausführungsbeispiel vorgesehen, Messlicht über einen WDM-(Wavelength Devision Multiplexing)-Koppler zusätzlich sichtbares Licht, welche vorliegend mittels einer LED 100 erzeugt wird, in die Abbildungsoptik des IR-Laserstrahls einzukoppeln. Da dieser Koppler aber sehr teuer sind, kann alternativ der FC/APC-Faseranschluss für das Sendelicht an einen Anschluss für sichtbares Licht angeschlossen werden.

Abgesehen von den Abbildungsoptiken AO sind die Komponenten des Vibrometers in einem Gehäuse 101 angeordnet, so dass eine Ausrichtung der Messteilstrahlen lediglich durch Justieren der Abbildungsoptik erfolgen kann, ein Bewegen des Gehäuses jedoch nicht erforderlich ist.

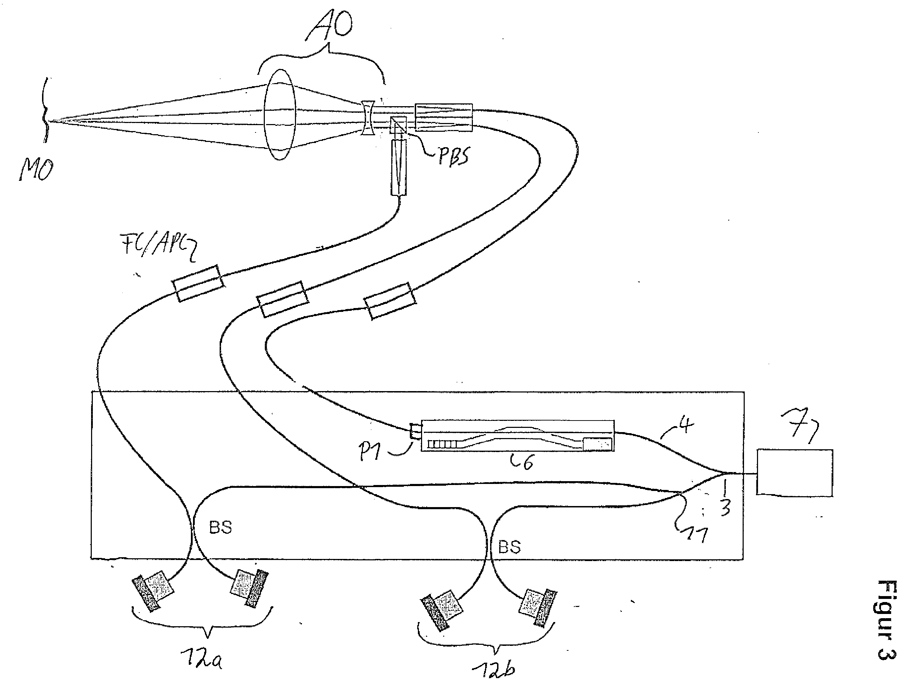

In Figur 3 ist ein zweites Ausführungsbeispiel eines erfindungsgemäßen Vibrometers gezeigt, welches eine Auswertung nach dem Diversity-Prinzip ermöglicht:
Der Grundaufbau gleicht dem Aufbau des Vibrometers gemäß Figur 2:
   Mittels einer Strahlungsquelle 7 wird ein Ausgangsstrahl im IR-Bereich, beispielsweise mit einer Wellenlänge von 1550 nm erzeugt, welcher durch eine Strahlteilervorrichtung 3 in einen ersten Teilstrahl 4 und einen zweiten Teilstrahl 5 aufgeteilt wird. Der erste Teilstrahl 4 dient als Messstrahl und durchläuft einen Frequenzschieber 6, an dessen Strahlausgang ein Polarisationsfilter P1 angeordnet ist. Mittels optischer Fasern wird der Messstrahl zu einer Abbildungsoptik AO geleitet, um auf einen Messpunkt auf der Oberfläche eines Messobjekts MO abgebildet zu werden.

Der von der Oberfläche des Messobjekts zumindest teilweise reflektierte und/oder gestreute Messstrahl tritt als Empfangsstrahl wieder in den Strahlengang des Vibrometers über die Abbildungsoptik AO ein.

Wesentlich ist nun, dass über einen Polarisationsstrahlteiler PBS der Empfangsstrahl in zwei Empfangsteilstrahlen aufgeteilt wird.

Bei dem Vibrometer gemäß Figur 2 liegen ebenfalls mehrere Empfangsteilstrahlen vor, wobei bei dem Vibrometer gemäß Figur 2 jedoch jeder Empfangsteilstrahl einem anderen Ortspunkt auf der Oberfläche des Messobjekts zugeordnet ist.

Bei dem Vibrometer gemäß Figur 3 sind hingegen beide Empfangsteilstrahlen im gleichen Ortspunkt auf der Oberfläche des Messobjekts zugeordnet, unterscheiden sich jedoch hinsichtlich ihrer Polarisation, aufgrund der Aufteilung durch den Polarisationsstrahlteiler PBS.

Hierdurch werden zwei Empfangsteilstrahlen erzeugt, die eine Auswertung zweier statistisch unabhängiger Detektionssignale nach Art des Diversity-Empfangs ermöglichen:
Das Vibrometer umfasst einen ersten Detektor 12A sowie einen zweiten Detektor 12B. Beide Detektoren sind in an sich bekannter Weise als Balanced-Detektoren ausgebildet.

Das Vibrometer umfasst weiterhin einen Referenzstrahl-Strahlteiler 11, mittels dessen der Referenzstrahl in zwei Teilstrahlen mit in etwa gleicher Intensität aufgeteilt wird.

Mittels des ersten Detektors 12A wird das Interferenzsignal zwischen erstem Referenzteilstrahl und erstem Empfangsteilstrahl ausgewertet. Analog wird mittels des zweiten Detektors 12B das Interferenzsignal des zweiten Referenzteilstrahls und des zweiten Empfangsteilstrahls ausgewertet, jeweils nach Art einer Balanced-Detektor-Auswertung.

Wesentlich ist nun, dass das Interferenzsignal des Detektors 12A und des Detektors 12B dem gleichen Messpunkt auf der Oberfläche des Messobjekts MO zugeordnet sind, jedoch aufgrund der unterschiedlichen Polarisation statistisch unabhängig voneinander sind.

Es ist somit das Ausbilden eines Gesamtinterferenzsignals nach Art des Diversity-Empfangs möglich, beispielsweise, indem jeweils das stärkere der beide Signale zur Auswertung verwendet wird oder indem eine Gewichtung der beiden Signale proportional zu deren Signalstärke zur Bildung eines Gesamtsignals erfolgt.

## Patentansprüche

1. Optisches Interferometer,
mit einem Ausgangsstrahl-Strahleingang (1) zum Einkoppeln eines Ausgangsstrahls und einer Strahlteilervorrichtung (3) zur Aufteilung des Ausgangsstrahls in zumindest einen ersten Teilstrahl (4) und einen zweiten Teilstrahl (5),
wobei das Interferometer als heterodynes Interferometer ausgebildet ist, indem zumindest ein optischer Frequenzschieber (6) im Strahlengang des Interferometers angeordnet ist und
wobei das Interferometer ein oder mehrere optische Wellenleiterelemente (2, F2, F3, F4) aufweist, mittels derer zumindest zwischen Ausgangsstrahl-Strahleingang (1), Strahlteilervorrichtung (3) und Frequenzschieber (6) optische Wellenleiter ausgebildet sind,
wobei der Frequenzschieber (6) im Strahlengang einer der Teilstrahlen angeordnet ist,
**dadurch gekennzeichnet,**
**dass** der Frequenzschieber (6) als doppelbrechender Wellenleiter ausgebildet ist, der eine Polarisation frequenzverschoben in die zweite Polarisationsrichtung überführt, und
**dass** das Interferometer zumindest einen Polarisationsfilter (P1) aufweist, wobei in dem Teilstrahl, in dem der Frequenzschieber angeordnet ist, der Frequenzschieber (6) zwischen Polarisationsfilter (P1) und Strahlteilervorrichtung (3) angeordnet ist, so dass Störlicht in der falschen Polarisation minimiert werden kann.

2. Interferometer nach Anspruch 1,
**dadurch gekennzeichnet,**
**dass** die optischen Strahlengänge zumindest zwischen Ausgangsstrahl-Strahleingang (1), Strahlteilervorrichtung (3) und Frequenzschieber (6) ohne Freistrahl, bevorzugt ausschließlich als Wellenleiter ausgebildet sind, insbesondere, dass die optischen Strahlengänge zumindest zwischen Ausgangsstrahl-Strahleingang, Strahlteilervorrichtung und Frequenzschieber keinen Freistrahl aufweisen.

3. Interferometer nach einem der vorangegangenen Ansprüche,
**dadurch gekennzeichnet,**
**dass** die Strahlteilervorrichtung (3) nichtpolarisierend ausgebildet ist.

4. Interferometer nach einem der vorangegangenen Ansprüche,
**dadurch gekennzeichnet,**
**dass** der Frequenzschieber (6) als piezoelektrisch beeinflussbarer Wellenleiter ausgebildet ist, vorzugsweise, dass der Frequenzschieber als akustooptischer Lithium-Niobat-Frequenzschieber ausgebildet ist, insbesondere als LiNbO₃-Frequenzschieber.

5. Interferometer nach einem der vorangegangenen Ansprüche,
**dadurch gekennzeichnet,**
**dass** die Strahlteilervorrichtung (3) zur Aufteilung von zumindest zwei Teilstrahlen mit unterschiedlichen Intensitäten ausgebildet ist, insbesondere, dass der erste Teilstrahl eine Intensität ≥ 60%, vorzugsweise ≥ 70%, weiter bevorzugt ≥ 80% der Gesamtintensität der beiden Teilstrahlen aufweist.

6. Interferometer nach einem der vorangegangenen Ansprüche,
**dadurch gekennzeichnet,**
**dass** das oder die optischen Wellenleiterelemente als planare Wellenleiterbahnen und/oder als optische Fasern ausgebildet sind, insbesondere, dass zumindest die Strahlengänge zwischen Strahleingang, Strahlteilervorrichtung und Frequenzschieber mittels planarer Wellenleiterbahnen ausgebildet sind.

7. Vibrometer zur interferometrischen Vermessung eines Objekts (MO), umfassend eine Strahlungsquelle (7), ein Interferometer gemäß einem der vorangegangenen Ansprüche und zumindest einen ersten Detektor (12a), wobei die Strahlungsquelle und Interferometer derart zusammenwirkend ausgebildet sind, dass ein von der Strahlungsquelle (7) erzeugter Lichtstrahl als Ausgangsstrahl in den Ausgangsstrahl-Strahleingang einkoppelbar ist,
wobei das Interferometer ausgebildet ist, den ersten Teilstrahl als Messstrahl auf das Objekt (MO) abzubilden und
wobei Interferometer und erster Detektor derart zusammenwirkend ausgestaltet sind, dass der von dem Objekt (MO) zumindest teilweise reflektierte Messstrahl als Empfangsstrahl und der Referenzstrahl auf mindestens einer Detektorfläche des ersten Detektors (12a) zumindest teilweise überlagert sind.

8. Vibrometer nach Anspruch 7 und zumindest nach Anspruch 5,
**dadurch gekennzeichnet,**
**dass** der erste Teilstrahl (4) der Messstrahl ist.

9. Vibrometer nach einem der Ansprüche 7 bis 8,
**dadurch gekennzeichnet,**
**dass** das Vibrometer eine Abbildungsoptik (AO) zur Abbildung des Messstrahls auf einen zugeordneten Messpunkt auf der Oberfläche des zu vermessenden Objekts (MO) aufweist.

10. Vibrometer nach Anspruch 9,
**dadurch gekennzeichnet,**
**dass** zwischen Abbildungsoptik (AO) und Interferometer die Strahlengänge von Messstrahl und Empfangsstrahl mittels Wellenleiterelementen, insbesondere mittels optischer Fasern ausgebildet sind.

11. Vibrometers nach einem der Ansprüche 7 bis 10,
**dadurch gekennzeichnet,**
**dass** die Strahlteilervorrichtung ausgebildet ist zur Aufteilung des Ausgangsstrahls in einen Messstrahl, einen ersten Referenzteilstrahl und mindestens einen zweiten Referenzteilstrahl und zur Aufteilung des Empfangsstrahls in einen ersten Empfangsteilstrahl und mindestens einen zweiten Empfangsteilstrahl,
**dass** das Vibrometer mindestens einen zweiten Detektor (12b) aufweist und derart ausgebildet ist, dass der erste Empfangsstrahl mit dem ersten Referenzteilstrahl auf einer Detektionsfläche des ersten Detektors (12a) und der zweite Empfangsteilstrahl mit dem zweiten Referenzteilstrahl auf einer Detektionsfläche des zweiten Detektors (12b) überlagert sind, jeweils unter Ausbildung einer optischen Interferenz, und
**dass** das Vibrometer eine Auswerteeinheit zur Auswertung der Messsignale des ersten und des zweiten Detektors (12a, 12b) aufweist, welche ausgebildet ist, die Messsignale der beiden Detektoren nach dem Prinzip der Empfangs-Diversität auszuwerten, insbesondere,
**dass** der Frequenzschieber (6) im Strahlengang des Messstrahls angeordnet ist.

12. Vibrometer nach Anspruch 11,
**dadurch gekennzeichnet,**
**dass** die Vorrichtung mindestens ein optisches Strahlteilmittel (PBS) umfasst, welches im Strahlengang des Empfangsstrahls und/oder des ersten und/oder des zweiten Empfangsteilstrahl angeordnet und derart ausgebildet ist, dass mit erstem und zweitem Detektor unterschiedliche Polarisationsanteile und/oder unterschiedliche Strahlquerschnittsanteile und/oder unterschiedliche Moden des Empfangsstrahls auswertbar sind.

## Claims

1. Optical interferometer,
having an output-beam beam input (1) for coupling in an output beam and having a beam splitter device (3) for splitting the output beam into at least one first sub-beam (4) and one second sub-beam (5),
wherein the interferometer is in the form of a heterodyne interferometer in that at least one optical frequency shifter (6) is arranged in the beam path of the interferometer and
wherein the interferometer has one or more optical waveguide elements (2, F2, F3, F4) by means of which optical waveguides are formed at least between the output-beam beam input (1), the beamsplitter device (3) and the frequency shifter (6),
wherein the frequency shifter (6) is arranged in the beam path of one of the sub-beams,
**characterised in that**
the frequency shifter (6) is in the form of a birefringent waveguide which converts one polarisation with a frequency shift into the second polarisation direction, and
the interferometer has at least one polarisation filter (P1), wherein in the sub-beam in which the frequency shifter is arranged, the frequency shifter (6) is arranged between the polarisation filter (P1) and the beam splitter device (3), so that disturbing light in the wrong polarisation can be minimised.

2. Interferometer according to claim 1,
**characterised in that**
the optical beam paths at least between the output-beam beam input (1), the beam splitter device (3) and the frequency shifter (6) are formed without a free beam and preferably exclusively in the form of waveguides, the optical beam paths especially not having a free beam at least between the output-beam beam input, the beam splitter device and the frequency shifter.

3. Interferometer according to either one of the preceding claims,
**characterised in that**
the beam splitter device (3) is non-polarising.

4. Interferometer according to any one of the preceding claims,
**characterised in that**
the frequency shifter (6) is in the form of a waveguide that can be influenced piezoelectrically, the frequency shifter preferably being in the form of an acousto-optic lithium niobate frequency shifter, especially in the form of a LiNbO₃ frequency shifter.

5. Interferometer according to any one of the preceding claims,
**characterised in that**
the beam splitter device (3) is configured for splitting at least two sub-beams with different intensities, the first sub-beam especially having an intensity ≥ 60 %, preferably ≥ 70 %, more preferably ≥ 80 %, of the total intensity of the two sub-beams.

6. Interferometer according to any one of the preceding claims,
**characterised in that**
the optical waveguide element(s) are in the form of planar waveguide tracks and/or in the form of optical fibres, at least the beam paths between the beam input, the beam splitter device and the frequency shifter especially being formed by means of planar waveguide tracks.

7. Vibrometer for interferometric measurement of an object (MO), comprising a radiation source (7), an interferometer according to any one of the preceding claims and at least one first detector (12a), wherein the radiation source and the interferometer are configured to co-operate in such a way that a light beam generated by the radiation source (7) can be coupled as output beam into the output-beam beam input,
wherein the interferometer is configured to image the first sub-beam as measuring beam onto the object (MO) and
wherein the interferometer and the first detector are configured to co-operate in such a way that the measuring beam at least partly reflected by the object (MO) as received beam and the reference beam are at least partly superimposed on at least one detector surface of the first detector (12a).

8. Vibrometer according to claim 7 and at least according to claim 5,
**characterised in that**
the first sub-beam (4) is the measuring beam.

9. Vibrometer according to either one of claims 7 and 8,
**characterised in that**
the vibrometer has an imaging lens (AO) for imaging the measuring beam onto an assigned measurement point on the surface of the object (MO) being measured.

10. Vibrometer according to claim 9,
**characterised in that**
between the imaging lens (AO) and the interferometer the beam paths of the measuring beam and the received beam are formed by means of waveguide elements, especially by means of optical fibres.

11. Vibrometer according to any one of claims 7 to 10,
**characterised in that**
the beam splitter device is configured to split the output beam into a measuring beam, a first reference sub-beam and at least one second reference sub-beam and to split the received beam into a first received sub-beam and at least one second received sub-beam, the vibrometer has at least one second detector (12b) and is configured in such a way that the first received beam is superimposed with the first reference sub-beam on a detection surface of the first detector (12a) and the second received sub-beam is superimposed with the second reference sub-beam on a detection surface of the second detector (12b), in each case giving rise to optical interference, and
the vibrometer has an evaluating unit for evaluating the measuring signals of the first and second detectors (12a, 12b), which evaluating unit is configured to evaluate the measuring signals of the two detectors according to the principle of reception diversity, the frequency shifter (6) especially being arranged in the beam path of the measuring beam.

12. Vibrometer according to claim 11,
**characterised in that**
the device comprises at least one optical beam-splitting means (PBS) which is arranged in the beam path of the received beam and/or of the first and/or of the second received sub-beam and is configured in such a way that, using the first and second detectors, different polarisation components and/or different beam cross-section components and/or different modes of the received beam can be evaluated.

## Revendications

1. Interféromètre optique,
comprenant une entrée de faisceau de faisceau de départ (1) pour injecter un faisceau de départ et un dispositif diviseur de faisceau (3) pour diviser le faisceau de départ en au moins un premier faisceau partiel (4) et un deuxième faisceau partiel (5),
lequel interféromètre est réalisé sous la forme d'un interféromètre hétérodyne, dans lequel au moins un décaleur de fréquence optique (6) est disposé dans le chemin optique de l'interféromètre et
lequel interféromètre présente un ou plusieurs éléments de guide d'ondes optiques (2, F2, F3, F4), au moyen desquels des guides d'ondes optiques sont formés au moins entre entrée de faisceau de faisceau de départ (1), dispositif diviseur de faisceau (3) et décaleur de fréquence (6),
dans lequel le décaleur de fréquence (6) est disposé dans le chemin optique d'un des faisceaux partiels,
**caractérisé en ce**
**que** le décaleur de fréquence (6) est réalisé sous la forme d'un guide d'ondes biréfringent qui fait passer une polarisation de manière décalée en fréquence dans la deuxième direction de polarisation et
**que** l'interféromètre présente au moins un filtre de polarisation (P1), le décaleur de fréquence (6) étant, dans le faisceau partiel dans lequel il est disposé, disposé entre le filtre de polarisation (P1) et le dispositif diviseur de faisceau (3), de sorte que la lumière parasite dans la mauvaise polarisation peut être minimisée.

2. Interféromètre selon la revendication 1,
**caractérisé en ce**
**que** les chemins optiques au moins entre entrée de faisceau de faisceau de départ (1), dispositif diviseur de faisceau (3) et décaleur de fréquence (6) sont réalisés sans faisceau libre, de préférence exclusivement sous la forme de guides d'ondes, en particulier que les chemins optiques au moins entre entrée de faisceau de faisceau de départ, dispositif diviseur de faisceau et décaleur de fréquence ne présentent aucun faisceau libre.

3. Interféromètre selon l'une des revendications précédentes,
**caractérisé en ce**
**que** le dispositif diviseur de faisceau (3) est réalisé non polarisant.

4. Interféromètre selon l'une des revendications précédentes,
**caractérisé en ce**
**que** le décaleur de fréquence (6) est réalisé sous la forme d'un guide d'ondes influençable piézoélectriquement, de préférence que le décaleur de fréquence est réalisé sous la forme d'un décaleur de fréquence acoustico-optique au niobate de lithium, en particulier d'un décaleur de fréquence au LiNbO₃.

5. Interféromètre selon l'une des revendications précédentes,
**caractérisé en ce**
**que** le dispositif diviseur de faisceau (3) est conçu pour diviser au moins deux faisceaux partiels d'intensités différentes, en particulier que le premier faisceau partiel présente une intensité ≥ 60 %, de préférence ≥ 70 %, davantage de préférence ≥ 80 % de l'intensité totale des deux faisceaux partiels.

6. Interféromètre selon l'une des revendications précédentes,
**caractérisé en ce**
**que** le ou les élément(s) de guide d'ondes optiques sont réalisés sous la forme de pistes de guide d'ondes planaires et/ou de fibres optiques, en particulier qu'au moins les chemins optiques entre entrée de faisceau, dispositif diviseur de faisceau et décaleur de fréquence sont réalisés au moyen de pistes de guide d'ondes planaires.

7. Vibromètre pour la mesure interférométrique d'un objets (MO), comprenant une source de rayonnement (7), un interféromètre selon l'une des revendications précédentes et au moins un premier détecteur (12a), dans lequel la source de rayonnement et l'interféromètre sont conçus pour coopérer de telle sorte qu'un faisceau de lumière produit par la source de rayonnement (7) puisse être injecté en tant que faisceau de départ dans l'entrée de faisceau de faisceau de départ,
dans lequel l'interféromètre est conçu pour reproduire le premier faisceau partiel sur l'objet (MO) en tant que faisceau de mesure et
dans lequel l'interféromètre et le premier détecteur sont conçus pour coopérer de telle sorte que le faisceau de mesure réfléchi au moins partiellement par l'objet (MO) en tant que faisceau de réception et le faisceau de référence soient superposés au moins partiellement sur au moins une surface de détection du premier détecteur (12a).

8. Vibromètre selon la revendication 7 et au moins selon la revendication 5, **caractérisé en ce**
**que** le premier faisceau partiel (4) est le faisceau de mesure.

9. Vibromètre selon l'une des revendications 7 à 8,
**caractérisé en ce**
**que** le vibromètre présente une optique de reproduction (AO) pour reproduire le faisceau de mesure sur un point de mesure associé à la surface de l'objet (MO) à mesurer.

10. Vibromètre selon la revendication 9,
**caractérisé en ce**
**qu'**entre l'optique de reproduction (AO) et l'interféromètre, les chemins optiques du faisceau de mesure et du faisceau de réception sont réalisés au moyen d'éléments de guide d'ondes, en particulier au moyen de fibres optiques.

11. Vibromètre selon l'une des revendications 7 à 10,
**caractérisé en ce**
**que** le dispositif diviseur de faisceau est conçu pour diviser le faisceau de départ en un faisceau de mesure, un premier faisceau partiel de référence et au moins un deuxième faisceau partiel de référence et pour diviser le faisceau de réception en un premier faisceau partiel de réception et au moins un deuxième faisceau partiel de réception,
**que** le vibromètre présente au moins un deuxième détecteur (12b) et est conçu de telle sorte que le premier faisceau de réception soit superposé avec le premier faisceau partiel de référence sur une surface de détection du premier détecteur (12a) et le deuxième faisceau partiel de réception avec le deuxième faisceau partiel de référence sur une surface de détection du deuxième détecteur (12b), en produisant chaque fois une interférence optique, et
**que** le vibromètre présente une unité d'analyse pour analyser les signaux de mesure du premier et du deuxième détecteur (12a, 12b), laquelle est conçue pour analyser les signaux de mesure des deux détecteurs selon le principe de la diversité de réception, en particulier
**que** le décaleur de fréquence (6) est disposé dans le chemin optique du faisceau de mesure.

12. Vibromètre selon la revendication 11,
**caractérisé en ce**
**que** le dispositif comprend au moins un moyen diviseur de faisceau optique (PBS), lequel est disposé dans le chemin optique du faisceau de réception et/ou du premier et/ou du deuxième faisceau partiel de réception et conçu de telle sorte que le premier et le deuxième détecteur permettent d'analyser différentes composantes de polarisation et/ou différentes composantes de section de faisceau et/ou différents modes du faisceau de réception.
